# EUROPEAN PATENT SPECIFICATION

(11) **EP 2 160 327 B1**
(45) Date of publication and mention of the grant of the patent: **27.11.2013**
(21) Application number: 08761366.7
(22) Date of filing: 25.06.2008
(51) Int. Cl.: B64D 11/00, G06F 17/30, G06F 3/0481

(54) **INTERACTIVE INFORMATION SYSTEM FOR AN AIRPLANE**
INTERAKTIVES INFORMATIONSSYSTEM FÜR FLUGZEUGE
SYSTÈME D'INFORMATION INTERACTIF POUR AVION

(30) Priority: 28.06.2007 DE 102007029841; 28.06.2007 US 937854 P
(43) Date of publication of application: 10.03.2010
(73) Proprietor: Airbus Operations GmbH, 21129 Hamburg (DE)
(72) Inventor: SCHWEIGER, Andy, 13187 Berlin (DE); SIEBER, Manfred, 21647 Moisburg (DE); RODAT, Peter, 22587 Hamburg (DE); BRÜGGERT, Thomas, 21641 Apensen (DE)
(74) Representative: Maiwald Patentanwalts GmbH
(86) International application number: PCT/EP2008/058084
(87) International publication number: WO 2009/000858

(56) References cited:
- US-A1- 2003 078 709
- US-A1- 2005 261 815
- US-A1- 2006 142 002
- US-B1- 6 661 353

## Description

### Field of the invention

The present invention relates to information systems for aircraft. In particular, the present invention relates to an interactive information system for an aircraft to provide passengers with information, the use of an interactive information system in an aircraft, and an aircraft with such an interactive information system.

### Technological background of the invention

Current airplane cabins offer the passenger information and entertainment services based on static content, meaning can only be influenced by the passenger to a limited extent relative to his or her special needs. By contrast, the passenger on the ground makes increasing use of services, such as the internet, which are characterized by a high level of interactivity.

US 6,661,353 B1 describes a method for displaying interactive flight map information. The interactive flight map is provided to a passenger through which information on the areas overflown can be accessed and utilized.

US 2006/0142002 A1 describes an area entertainment system including digital radio service and associated methods. A digital satellite radio receiver is provided on board of an aircraft for providing digital satellite radio signals to the entertainment system. US 2005/0261815 A1 describes a system for customizing settings and sounds for vehicle, including a control unit adapted to communicate with a vehicle input source and a vehicle auxiliary device.

US 2003/0078709 A describes a method and system for maintaining personalization of user adjustable features. One or more variable vehicle operating parameters can selectively be set by storing information representative of user preferences.

### Summary of the invention

The object of the present invention is to provide an improved information system for passengers. This is achieved by means of the interactive information system defined in claim 1.

One exemplary embodiment of the present invention provides an interactive information system for an aircraft for providing passengers with information, wherein the interactive information system exhibits an onboard data storage device for storing primary data, and an access unit for accessing secondary data during the flight, wherein the secondary data are stored on an off-board data storage device. It also comprises a computer for generating informative data based on primary data, secondary data and an aircraft position, and an output unit for visualizing the informative data for the passenger.

In other words, the interactive information system has the capability on the one hand of accessing stored onboard data, the so-called primary data. In addition, the system can use a corresponding access unit to access secondary data stored in an off-board data storage device. This off-board data storage device can be a terrestrial server, for example, but also the internet as a whole, if necessary in combination with a corresponding satellite link. For example, the basic data frequently accessed by the system may be stored on an onboard server, a local hard disk or a mobile device in the aircraft. This mobile device can be a laptop, an MP3 player, a mobile telephone, a memory stick or a PDA, for example.

The onboard data storage device may hence be permanently installed in the aircraft. However, use may also be made of data storage devices that are pre-recorded and used by the individual passengers. The onboard data storage device may also be a combination of these individual data storage devices.

Further, the interactive information system may exhibit a device for determining the current position of the aircraft. This can be a global positioning system (GPS) module that communicates with the corresponding satellites, for example. This position- determining unit can be the same one that also accesses airplane navigation. However, it may also be a separate, additional position-determining unit.

The corresponding data are then transferred to a computer that generates an informative data set. A selection of this data set or the entire data set is then visualized in the output unit, and displayed to the passenger as a still or moving image, if necessary combined with a corresponding sound recording.

The interactivity of the information system may allow the passenger to independently access the calculations of the information system at any time. For example, the passenger or user may use an input device like a computer mouse or PDA to increase the resolution of the display, e.g., zoom into the image representing the visualized informative data. Another interactivity feature is also the reverse channel capability. This involves the technical characteristic that enables a simple and continuous switching of roles between the transmitters and receivers. In this way, the transmitter and receiver may control and monitor the progression of a communicative operation.

As a result, a passenger wishing to do so can determine which information to visualize at any time. For example, the interactive information system may in this way serve as an interactive learning program, which imparts information to the passenger about the region, places of interest or specific geographic peculiarities relating to the area over which the airplane is flying at time. If not interested in information about the current airplane position, the passenger can retrieve and visualize data about earlier positions of the airplane or later positions of the airplane. The passenger can also determine a virtual flight route and thereby display a virtual, simulated flight, along with the corresponding sights, objects on the map, geographic peculiarities, current events of interest, e.g., business-related, or also climatic and geological information. The passenger may select the information to be displayed in advance or during visualization, as needed.

Furthermore, the interactive information system is, according to the present invention, adapted for entering an individual user profile via a mobile device of the passenger, wherein the interactive information system is designed to individualize the informative data based on a user profile and wherein the user profile forms a basis for displaying the informative data on the output unit.

Thus, the passenger may generate his own user profile on his mobile device and may then program the interactive information system during or before each flight by transferring his user profile data to the interactive information system. The user may administrate his profile by himself. The user profile data may be removed from the interactive information system after the flight. Thus, data security may be provided.

In another exemplary embodiment of the present invention, the interactive information system is designed for visualizing the informative data in real time.

In another exemplary embodiment of the present invention, the access unit is designed for accessing secondary data via the internet. For example, if the passenger wishes to retrieve information not stored in the onboard data storage device, the access unit accesses the secondary data. This is done by way of a radio communication system and the internet. In this way, a plurality of data storage devices or servers may be operated throughout the world.

In another exemplary embodiment of the present invention, access to the secondary data takes place as a function of the currently selected display mode of the visualized informative data. For example, access to the secondary data depends on the current view selected by the user (for example, the current position of the airplane or virtual position on a virtual, selected flight route).

In another exemplary embodiment of the present invention, the visualized informative data contain a map, selected objects on the map and the position of the airplane. Taking advantage of the system interactivity, the user (passenger or crewmember) can chose the form in which the map is to be displayed (two-dimensionally, three-dimensionally, in color, with roadways, railway lines or without traffic routes, with labeling of cities, street names, etc., with places of interest, etc.). In addition, the user can select the type of objects to be visualized (special buildings, special geographic conditions, etc.), and what position to show the airplane in (e.g., top view of airplane, or as stylized point).

In this way, individualized information may be visualized, for example, oriented to a user profile of the user retrieved beforehand.

In another exemplary embodiment of the present invention, the interactive information system exhibits a dialogue unit with an integrated voice controller for the passenger to input control commands. For example, the user can voice the control commands. The user can hence control the information system by saying commands out loud.

This may allow the user to easily and effectively control the information system without having to use his or her hands, for example. This tangibly increases passenger comfort.

Another exemplary embodiment of the present invention provides a "Lingubot ™". In this case, the user can input instructions or commands into the system by way of a keyboard of the dialogue unit. Lingubot ™ is also responsible in particular for processing the input data or commands/instructions.

Dialogue with the Lingubot ™ takes place by entering entire sentence via the keyboard, and the Lingubot ™ responds on screen, or, at request, with a voice message on a loudspeaker.

The system is designed to incorporate or create automated real-time dialogue systems (virtual assistants) that are able to carry on text-based, human-like "one-to-one" dialogues. For example, this is achieved by finding the best-suited answer to an input of a user from a knowledge database.

The knowledge database is based on rules (Boolean expressions) comprised of words, word segments, word sequences, word positions, correlative meaning and other data. Each answer corresponds to an unambiguous rule for recognition (condition). If the condition is satisfied, the answer is given. Recognition works not just in response to an answer, but as many equivalent entries as possible. It is also possible to define optional answers for the same rule.

The knowledge database is stored in a proprietary file format. Contextual information, external database and application queries along with information stored during the dialogue are also used for the recognition process. In like manner, the answers need not be static: The system can access web services and databases to generate data from the entries or incorporate external information during the runtime.

The server application, the web engine, receives a query containing the user entry along with contextual data. It splits the user entry into sentences and words, and reacts based on the best condition reaction rule of the knowledge database. In addition, the server application stores log files and maintains the session contents. The session contents encompass the topics addressed by the user during one or more sessions.

The contextual information of the running dialogue permit the entry of goal-oriented dialogues, in which the artificial intelligence takes the initiative, and actively queries the user for required information or addresses topics with high priority. This is accomplished with techniques like opening web pages, calling up one or more search engines, etc.

In another exemplary embodiment of the present invention, the computer and/or dialogue unit are designed to provide or support user guidance and/or visualize information with one or more avatars.

An avatar is a virtual person or graphic representation of a real person. For example, the avatar is displayed in the form of an image, icon or 3-D figure of a human or other being.

Therefore, we are here talking about the display of a two-dimensional or three-dimensional figure on the output unit, which is able to respond to commands or other user inputs. For example, the figure can respond with corresponding gestures or facial expressions correlated with user inputs or the commands. This may ensure a rapid and visual feedback to the user.

In another exemplary embodiment of the present invention, access to the secondary data takes place independently of a currently selected display mode, and independently of the travel route of the airplane.

In another exemplary embodiment of the present invention, the output unit and/or program on the computer is designed for three-dimensional visualization of the informative data. This may make it possible to further increase the information content.

In another exemplary embodiment of the present invention, the interactive information system is designed to individualize the informative data based on the user profile, wherein the use profile serves as the basis for displaying the informative data on the output unit.

For example, the user profile can be entered into the system prior to departure. It is here possible to store the user system for an extended period, for example, on a central, terrestrial server, so that it can be retrieved from this server as required when the user goes on a flight at a later point. In this way, the user always finds the visualized informative data tailored to him or her. This may eliminate the need for the user to continuously select individual preferences, or provide information to individualize the user.

In another exemplary embodiment of the present invention, the informative data contain selected events related to a location on the map, a selected object on the map, or the current position of the airplane.

For example, the primary data or secondary data contain corresponding references (links), which show the links between the selected travel route, the current position of the airplane, and the locations, objects or geographic peculiarities of the map. When required, these links are then activated automatically or triggered by the user, so that the corresponding information can be displayed.

This permits a guided or individual tour through a virtual landscape or virtual earth's surface using three-dimensional maps and three-dimensional objects in an aircraft.

In another exemplary embodiment of the present invention, the dialogue unit is designed to provide the passenger with access to the internet.

This allows the passenger to obtain individual information form terrestrial servers and the like at any time.

In another exemplary embodiment of the present invention, the dialogue unit is designed to provide the passenger with internet telephone service. This allows the passenger to contact persons outside the airplane at any time.

In another exemplary embodiment of the present invention, the interactive information system is designed to access a geo database. This can be the geo data of the public Google database, for example, or the Microsoft Virtual Earth database. It can also be another geo database, for example a separately created and programmed database. These data can be retrieved as necessary.

In another exemplary embodiment of the present invention, the interactive information system is designed to access an internet page of a hotel, service booking entity, ticket booking entity, bar, restaurant, library or business on an individual travel route, either automatically or initiated by the passenger. The individual travel route is either automatically selected by the system, for example based on the user profile or actual travel route of the airplane, or also directly by the passenger.

In this way, valuable information can be provided to the passenger, for example relating to accommodations at the destination. In addition, the passenger can use the system to reserve a hotel room or rent a car.

In another exemplary embodiment of the present invention, the interactive information system also exhibits a communications module for providing communication between the passenger and a crewmember. The communications module can also be designed for passenger-passenger communication, crewmember-crewmember communication or communication between the crewmembers and/or passengers and the ground personnel/off board individuals.

In another exemplary embodiment of the present invention, the access unit is further designed to provide and/or visualize a terrestrial television program or satellite-based television program. This may make it possible to use the television or radio shows offered by ground stations.

In another exemplary embodiment of the present invention, the interactive information system further exhibits an interface for purposes of exchanging data between the interactive information system and a mobile device of the passenger.

The mobile device can be a notebook, a PDA, a mobile phone or an MP3 player, for example.

For example, in another exemplary embodiment of the present invention, the interactive information system is designed to be controlled by the mobile device.

Therefore, passengers can use their notebooks to input individual user profiles into the information system, or transfer data form the information system to the notebook.

For example, they can use their PDA or notebook in conjunction with the information system to surf the internet. In addition, video and audio files stored on the mobile device can be played back via the interactive information system.

In another exemplary embodiment of the present invention, the interactive information system further exhibits a control unit for controlling a seat adjustment, a light source or sound source. Depending on the position of the airplane, the light can be adjusted accordingly. In like manner, corresponding sun protection devices in the airplane can be lowered or raised depending on the position of the airplane and location of the sun, so that the sun cannot blind the passenger. The sound source can be actuated as needed to provide support or background for the visual information using the corresponding audio information. In addition, the seat can be adjusted or positioned by means of the control unit.

In another exemplary embodiment of the present invention, the dialogue unit has a zoom function with which the passenger can magnify selected portions of the informative data visualized by the output unit.

This may allow the passenger to magnify selected parts of the map to obtain specific information.

In another exemplary embodiment of the present invention, the dialogue unit has a rotation or turn function, which the passenger can use to rotate selected portions of the informative data visualized by the output unit.

In another exemplary embodiment of the present invention, the system is designed for optional automatic, guided or individual operation.

For example, so-called "guided tours" can be presented, which take the user (passenger) "by the hand" and fly the flight route in a time lapse mode, wherein particular attention is paid to specific features along the flight route (such as course changes, altitude changes, velocity change, geographic/local peculiarities), which are graphically displayed accordingly. This may make it possible to provide the passenger with a large volume of information in a short period of time.

Another exemplary embodiment of the present invention provides the use of an interactive information system in an aircraft.

Another exemplary embodiment of the present invention specifies an aircraft with an interactive information system.

Exemplary embodiments of the present invention will be described below with reference to the figures.

### Short description of the drawings

Fig. 1 shows a diagrammatic view of components of an information system according to an exemplary embodiment of the present invention.
Fig. 2 shows an output unit with visualized informative data according to an exemplary embodiment of the present invention.
Fig. 3 shows an output unit with visualized informative data according to another exemplary embodiment of the present invention.
Fig. 4 shows an output unit with visualized informative data according to another exemplary embodiment of the present invention.
Fig. 5 shows an output unit with visualized informative data according to another exemplary embodiment of the present invention.
Fig. 6 shows an output unit with visualized informative data according to another exemplary embodiment of the present invention.
Fig. 7 shows an output unit with visualized informative data according to another exemplary embodiment of the present invention.
Fig. 8 shows an output unit with visualized informative data according to another exemplary embodiment of the present invention.
Fig. 9 shows a diagrammatic view of an airplane with an information system according to an exemplary embodiment of the present invention.
Fig. 10 shows a diagrammatic view of an information system according to another exemplary embodiment of the present invention.

### Detailed description of exemplary embodiments

The views in the figures are diagrammatic and not to scale.

The same reference numbers are used for identical or similar elements in the following description of figures.

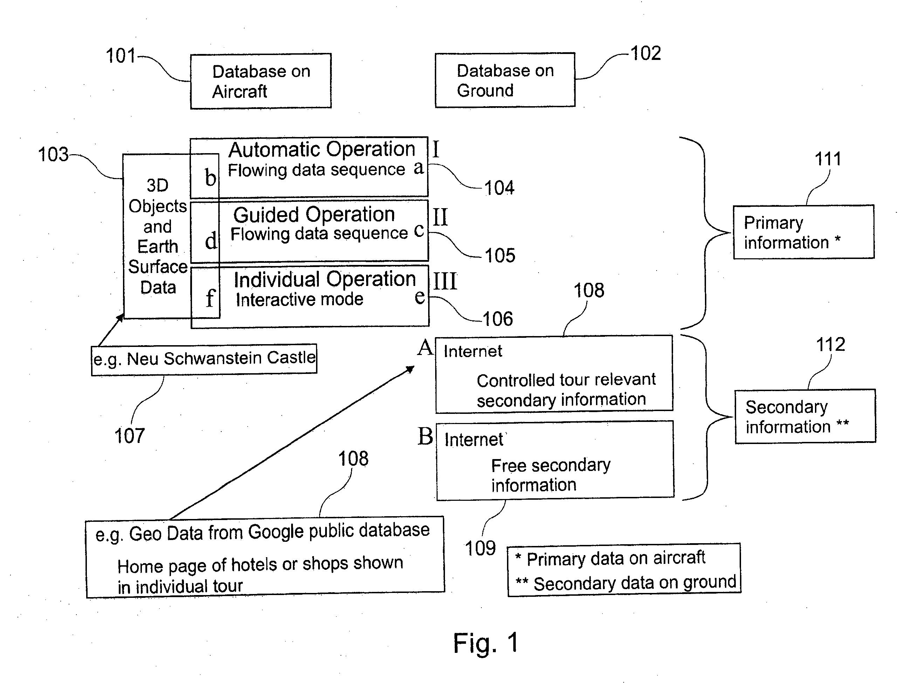

Fig. 1 provides a view to clarify the function of the information system according to an exemplary embodiment of the present invention. The information system is interactive, and exhibits a first database 101 for storing primary data. The first database 101 is designed as an onboard data storage device, and comprises a server, one or more local hard drives and/or mobile devices, such as MP3 players, laptops or mobile phones, for example. Also provided is a second, off-board database 102, for example (terrestrially) installed on the ground. This can take the form of one or more terrestrial servers, if necessary in combination with the internet.

The system is optionally configured for automatic operation 104, guided operation 105, with flowing data streams/sequences, or individual operation 106 in an interactive operating mode. In each case, three-dimensional or two-dimensional objects and data can be displayed relative to the earth's surface 103. These data may relate to structural peculiarities, such as the Neuschwanstein castle 107.

The terrestrial database (off-board data storage device) for the secondary data encompasses the internet, which can be used to take a guided tour through relevant secondary information 108. In addition, internet enables access to free secondary information 109, whether triggered automatically or by the passenger.

Therefore, the primary data 111 are stored in the airplane. The secondary data or secondary information 112 are terrestrially stored.

The secondary data may also be geo-data from a public database 108 such as provided by Google^{™}. These can also be internet pages of hotels or businesses that can be displayed via a corresponding link during an individual tour.

Hence, a highly integrated data center is provided in conjunction with the cabin network infrastructure, which also utilizes the ground infrastructure adapted to flight requirements. The interactive ground services can therefore be transferred to the airplane.

The interactive capabilities for the passenger also assist the cabin crew, and hence the airline, in also optimizing the operational procedures in the cabin, and potentially open up new operating or business areas in the cabin.

As a result, a harmonized portal environment with integrated voice control is provided for the target groups comprised of passengers, crew and mechanics. User command recognition is enabled by Lingubot^{™} and user prompting through avatars, for example. This may also make it easier for passengers less familiar with internet technologies to access the various digital media services.

The primary data are stored in the airplane, and safeguarded by the used storage technology against extreme environmental conditions, such as high and low temperatures, strong vibrations and frequent pressure differences. For example, the data storage devices are mounted, suspended or damped accordingly, and exhibit corresponding thermal insulation.

The portal environment exhibits further functions for the passenger, such as display of terrestrial television programs and voice-over IP telephony. Also enabled is an interoperability between the portal environment and mobile devices of the passenger. Notebooks, PDA's, mobile phones and MP3 players can be utilized as data sources, to store data and to control the portal functions.

Otherwise, the interactive information system can also be used in other means of transportation, such as ships or trains. The system has been functionally expanded to a great extent relative to previously known systems, and enables a rapid and flexible response to customer wishes.

The dialogue system enables control via Lingu-Bot, so that the system can be controlled not just via the written word, but in particular can interact with the system through "small talk" as well. For example, the system can provide corresponding answers to specific questions, or prompt the user to take certain actions.

This may make it possible to significantly shorten the subjectively perceived flight time.

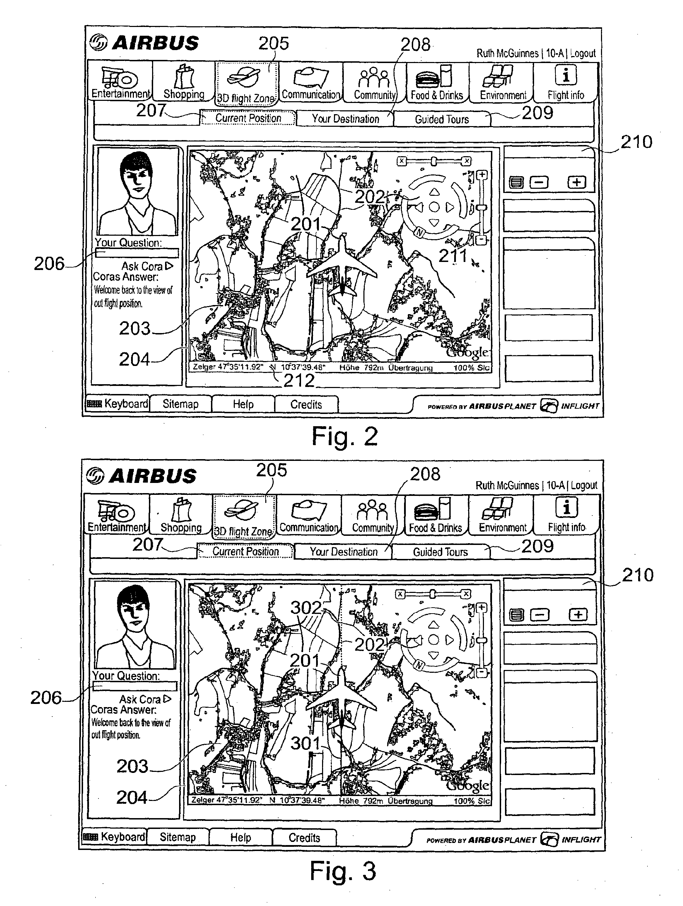

Fig. 2 shows an output unit with visualized information data according to an exemplary embodiment of the present invention. In particular, the output unit exhibits an area 204 where the map 203 is displayed. The map 203 symbolizes or visualizes the region over which the airplane is flying at the time (in actuality or a virtual travel route selected by the user, i.e., any travel route other than the one currently in progress). A top view 201 of the airplane is shown. Also depicted is a compass dial 202, which is intended to serve as an orientation aid and enable navigation. The bar 211 can be used to activate the zoom function. The corresponding geographic data are shown in the lower bar 212. These include the altitude above mean sea level, the geographic longitude and latitude information, and the current scale.

It must be noted that the display can also be three-dimensional. The user can here individually set the viewing angle.

Also provided is an audio player 210 to play back corresponding audio files (e.g., geographic descriptions of the area or places of interest).

To this end, the audio player 210 has rewind/fast forward and select functions, along with volume control and other controls.

In addition, the user can relay questions or suggestions to the crew or information system via the input field 206. For example, drink or food orders can be taken.

As evident from the top line, the "3D flight zone" mode 205 is selected.

The current position 207 is shown. However, it is also possible to display information about the destination 208 or take a guided tour 209.

Fig. 3 shows an output unit with visualized informative data according to another exemplary embodiment of the present invention. In addition to the airplane 201, the previously covered flight route 301 is shown as a solid line, and the remaining flight route 302 as a dashed line. The flight route can also be displayed in another way, e.g., transparently.

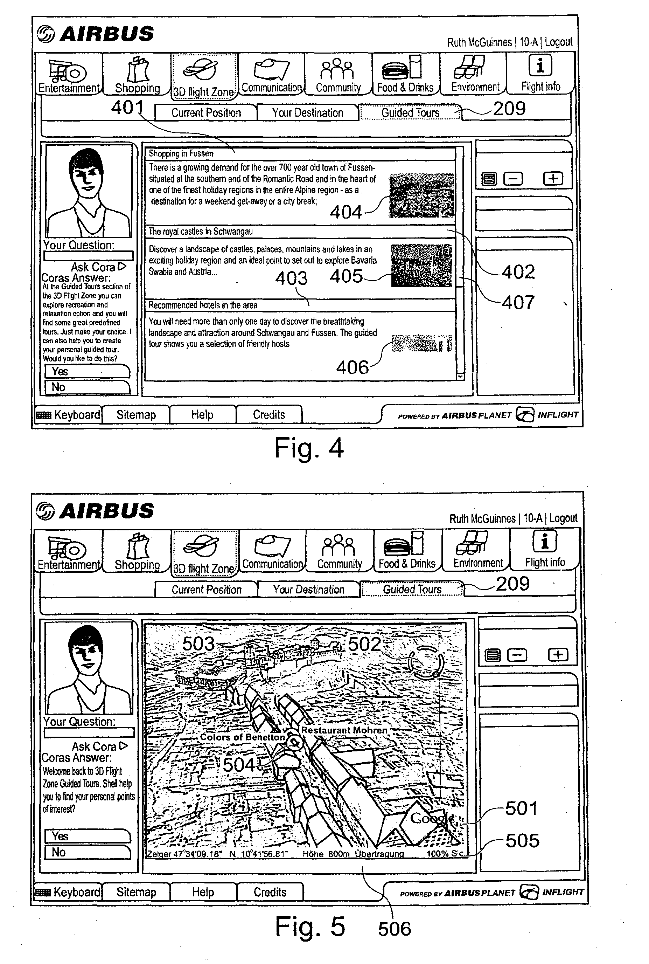

Fig. 4 shows an output unit with visualized informative data according to another exemplary embodiment of the present invention. This involves the "guided tours" mode 209.

For example, information is automatically displayed about shopping facilities 401, places of interest (e.g., Hohenschwangau castle) 402, or recommended hotels in the selected region 403. This information can be combined with corresponding images 404, 405, 406. Also provided is a scroll function 407, with which the user can scroll through the information.

Fig. 5 shows an output unit with visualized informative data according to another exemplary embodiment of the present invention. This again involves a so-called guided tour 209. In this case, the information is displayed three-dimensionally, accessing the geographic database of Google. The top right corner of the image again shows a compass dial 502. The depicted region 501 exhibits a place of interest, specifically a castle 503, and specific shopping facilities (Colors of Benetton) and restaurants 504 are also shown. The user can move through the guided tour by means of the control cluster 506, e.g., through winding, engaging the time-lapse mode, or activating a pause function.

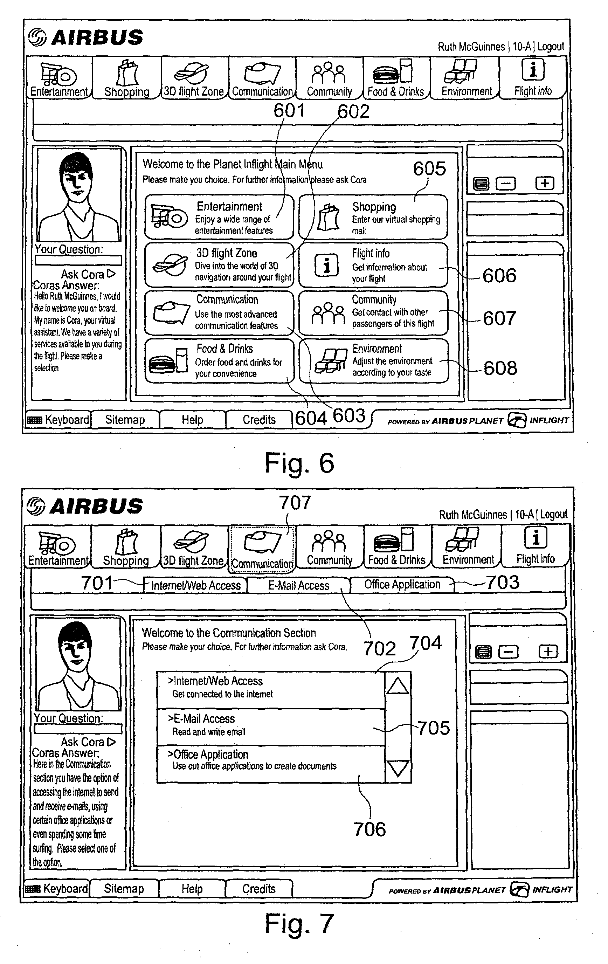

Fig. 6 shows an output unit with visualized informative data according to another exemplary embodiment of the present invention. This is the main menu of the interactive information system. The user can chose between entertainment 601, the three-dimensional flight zone 602, a communication system 603 that enables communication with off-board individuals, e.g., via e-mail or internet telephony, the food menu 604, shopping facilities 605, flight information 606, communication with other flight passengers 607 and personal settings 608.

The food menu 604 can be used to place corresponding orders with the crew. The community area 607 allows the user to communicate with other flight guests or the crew, for example via keyboard or corresponding microphones and headsets/loudspeakers.

Fig. 7 shows an output unit with visualized informative data according to another exemplary embodiment of the present invention. The system is here in the communication mode 707, 603. A choice can here be made between internet access 701, e-mail access 702 and specific office applications 703.

Users wishing to connect with the internet select field 704. Field 705 is selected to send an e-mail. Documents are generated by selecting field 706.

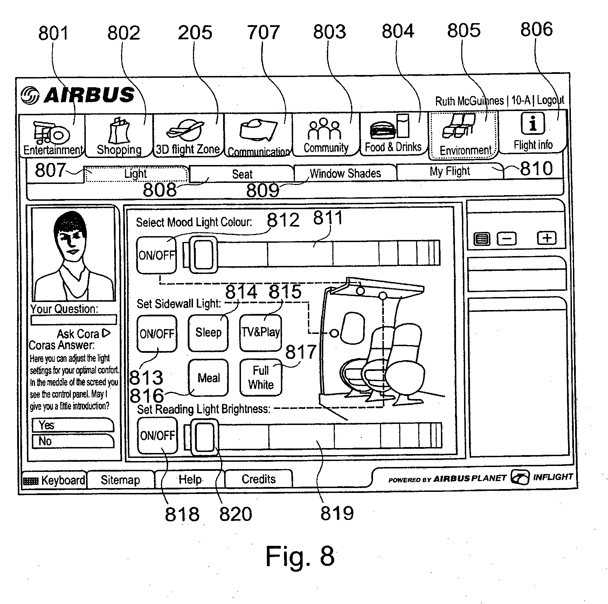

Fig. 8 shows an output device with visualized informative data according to another exemplary embodiment according to the present invention. The "environment" mode 805 is here activated. The user can also select "entertainment" 801 for entertainment, "shopping" 802 for shopping, "3D flight zone" for flight information or geographic peculiarities 205, "communication" 707 for communicating with other subscribers, "community" 803 for communicating with other passengers or crewmembers, "food and drinks" 804 for ordering or selecting food or drinks, "flight info" 806 to obtain flight information.

In addition, the individual setting options light 807, seat 808, window shade 809 and "my flight" 810 can be selected. The option "light" 807 is here chosen.

The user or airline customer/passenger can here select the color of light via bar 811, and turn the light on and off via button 812.

In addition, the lateral wall lights can be turned on and off via button 813. Various operating modes are here possible, specifically a sleep mode 814, a television and play mode 815, an eating mode 816 and a full white light mode 817.

The user can further correspondingly vary the color and intensity of the reading light incorporated in the ceiling area via bar 819 in combination with the linear regulator 820. This light can be turned on and off via switch 818.

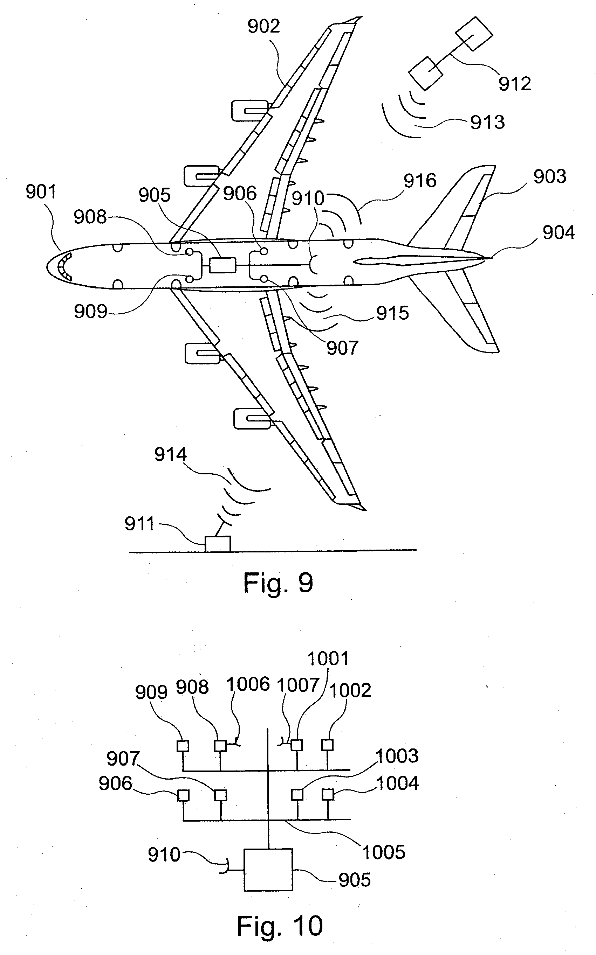

Fig. 9 shows an airplane according to an exemplary embodiment of the present invention, which exhibits a fuselage 901, wings 902, an elevator unit 903 and a rudder unit 904. The fuselage 901 incorporates the interactive information system. The system here encompasses a server or central computer 905, which is linked with corresponding output units 906, 907, 908, 909.

The information system further exhibits an access unit with an antenna 910 for communicating with a terrestrial server 911 or a satellite 912.

Communication takes place via radio signals 913, 914, 915, 916, for example, and can be bi-directional. For example, this enables internet telephony.

Fig. 10 shows an interactive information system according to another exemplary embodiment of the present invention, which exhibits a server or central computer 905 linked with an antenna 910. The system of leads 1005 links the server 905 with the individual output units to visualize the informative data 906, 907, 908, 909, 1001, 1002, 1003 and 1004.

Each of these output units is provided for a specific passenger, and arranged in the backrest of the front seat, for example. It can also be situated in the armrest of the passenger seat.

The different output units can exhibit individual radio interfaces or optical communication interfaces 1006, 1007, for example, in order to communicate with mobile devices of the passengers or dial into the internet.

It is important that the informative data have links to corresponding geographic/structural/cultural or commercial peculiarities, which are presented to the user on request or automatically in the form of a guided tour.

The system offers the entire 3D earth viewer functionality via access to the off-board databases. The data quantity stored in the airplane measures 2 TB, for example. The other required data are loaded via the internet. There are basically prescribed contents that are visualized. However, users can actively intervene and help determine the contents they wish to have presented at any time. This provides a voice-controlled menu guide. It enables onboard event booking, table reservation, hotel reservations or automobile rental.

Let it additionally be noted that "comprising" or "exhibiting" do not preclude any features or steps, and "one" and "a" do not preclude a plurality. Further, let it be noted that features or steps described with reference to one of the above exemplary embodiments can also be used in combination with other features or steps of other exemplary embodiments described above.

Reference numbers in the claims are not to be regarded as a limitation.

According to an exemplary embodiment of the invention, the computer and dialogue unit are designed to provide user guidance with one or more avatars.

According to another exemplary embodiment of the invention, a program of the computer is designed to three-dimensionally visualize the informative data.

According to another exemplary embodiment of the invention, the informative data exhibit selected events that relate to a location on the map, a selected object on the map or the current position of the airplane.

According to another exemplary embodiment of the invention, the interactive information system is designed to access a geographic database.

According to another exemplary embodiment of the invention, the interactive information system comprises a position-determining unit for determining the position of the aircraft.

According to another exemplary embodiment of the invention, the interactive information system is designed to access at least one of an internet page of a hotel, a service booking entity, a ticket-booking entity, a bar, a restaurant, a library or a business on an individual travel route, either automatically or initiated by the passenger.

According to another exemplary embodiment of the invention, the access unit is further designed to provide and visualize a terrestrial television program or a satellite-based television program.

According to another exemplary embodiment of the invention, the dialogue unit is designed to provide the passenger with access to the internet.

## Claims

1. An interactive information system for an aircraft to provide information to passengers, wherein the interactive information system exhibits:
an onboard data storage device (101) for storing primary data;
an access unit (910) for accessing secondary data during flight, wherein the secondary data are stored on an off-board data storage device (102);
a computer (905) for generating informative data based on the primary data, the secondary data and a position of the aircraft;
an output unit (906) for visualizing the informative data for a passenger;
**characterized in that** the interactive information system is adapted for inputting of an individual user profile, which can be administrated by the passenger, via a mobile device of the passenger;
wherein the interactive information system is designed to individualize the informative data based on the user profile; and
wherein the user profile forms a basis for displaying the informative data on the output unit.

2. The interactive information system of claim 1,
designed to visualize the informative data in real time.

3. The interactive information system of claim 1 or 2,
wherein the visualized informative data comprise a map, selected objects on the map and the position of the aircraft.

4. The interactive information system of one of the preceding claims, further comprising:
a dialogue unit with an integrated voice controller for the passenger to input control commands.

5. The interactive information system of one of the preceding claims,
wherein the access unit (910) is designed for accessing the secondary data via the internet.

6. The interactive information system of one of the preceding claims,
wherein the secondary data are accessed as a function of the currently selected display mode.

7. The interactive information system of one of the preceding claims,
wherein the secondary data are accessed independently of the currently selected display mode, and independently of the travel route of the aircraft.

8. The interactive information system of one of the preceding claims,
designed to optionally select between automatic, guided or individualized operation.

9. The interactive information system of one of the preceding claims, further comprising:
a communications module designed to provide communication between at least one of the passenger and a crewmember, between the passenger and another passenger, between a crewmember and another crewmember, between a crewmember and ground personnel or offboard individuals, and between the passenger and ground personnel or off-board individuals.

10. The interactive information system of one of the preceding claims, further comprising:
an interface for providing data exchange between the interactive information system and the mobile device of the passenger.

11. The interactive information system of one of the preceding claims,
wherein the dialogue unit is designed to provide the passenger with access to the internet; and
wherein the dialogue unit is designed to provide the passenger with internet telephony.

12. The interactive information system of one of the preceding claims, further comprising:
a control unit for controlling at least one of a seat adjustment, a light source and a sound source.

13. The use of an interactive information system of one of claims 1 to 12 in an airplane.

14. An aircraft exhibiting an interactive information system of one of the claims 1 to 12.

## Patentansprüche

1. Interaktives Informationssystem für ein Flugzeug zur Bereitstellung von Information an Passagiere, das interaktive Informationssystem aufweisend:
einen bordinternen Datenspeicher (101) zum Speichern von Primärdaten;
eine Zugriffseinheit (910) zum Zugriff auf Sekundärdaten während des Fluges, wobei die Sekundärdaten auf einem bordexternen Datenspeicher (102) gespeichert sind;
einen Computer (905) zum Erzeugen von Informationsdaten auf Basis der Primärdaten, der Sekundärdaten und einer Position des Flugzeugs;
eine Ausgabeeinheit (906) zum Visualisieren der Informationsdaten für den Passagier;
**dadurch gekennzeichnet, dass** das interaktive Informationssystem zur Eingabe eines individuellen Benutzerprofils ausgeführt ist, das durch den Passagier mittels eines mobilen Geräts des Passagiers verwaltet werden kann;
wobei das interaktive Informationssystem ausgeführt ist zum Individualisieren der Informationsdaten auf Basis des Benutzerprofils; und
wobei das Benutzerprofil eine Grundlage zum Darstellen der Informationsdaten auf der Ausgabeeinheit darstellt.

2. Das interaktive Informationssystem nach Anspruch 1,
ausgeführt zum Visualisieren der Informationsdaten in Echtzeit.

3. Das interaktive Informationssystem nach Anspruch 1 oder 2,
wobei die visualisierten Informationsdaten eine Landkarte, ausgewählte Objekte auf der Landkarte und die Position des Flugzeugs aufweisen.

4. Das interaktive Informationssystem nach einem der vorhergehenden Ansprüche, weiterhin ausweisend:
eine Dialogeinheit mit einer integrierten Sprachsteuerung zur Eingabe von Steuerbefehlen durch den Passagier.

5. Das interaktive Informationssystem nach einem der vorhergehenden Ansprüche,
wobei die Zugriffseinheit zum Zugriff auf die Sekundärdaten über das Internet ausgeführt ist.

6. Das interaktive Informationssystem nach einem der vorhergehenden Ansprüche,
wobei der Zugriff auf die Sekundärdaten in Abhängigkeit von einem aktuellen ausgewählten Darstellungsmodus erfolgt.

7. Das interaktive Informationssystem nach einem der vorhergehenden Ansprüche,
wobei der Zugriff auf die Sekundärdaten unabhängig von einem aktuellen ausgewählten Darstellungsmodus und unabhängig von der Reiseroute des Flugzeugs erfolgt.

8. Das interaktive Informationssystem nach einem der vorhergehenden Ansprüche, ausgeführt zum wahlweisen automatischen, geführten oder individualisierten Betrieb.

9. Das interaktive Informationssystem nach einem der vorhergehenden Ansprüche, weiterhin aufweisend:
ein Kommunikationsmodul zur Bereitstellung einer Kommunikation zwischen dem Passagier und einem Besatzungsmitglied, zwischen dem Passagier und einem anderen Passagier, zwischen einem Mitglied der Besatzung und einem weiteren Mitglied der Besatzung, zwischen einem Mitglied der Besatzung und einem Mitglied des Bodenpersonals oder einer bordexternen Person, und/oder zwischen dem Passagier und einem Mitglied des Bodenpersonals oder einer bordexternen Person.

10. Das interaktive Informationssystem nach einem der vorhergehenden Ansprüche, weiterhin ausweisend:
eine Schnittstelle zur Bereitstellung eines Datenaustausches zwischen dem interaktiven Informationssystem und einem mobilen Gerät des Passagiers.

11. Das interaktive Informationssystem nach einem der vorhergehenden Ansprüche,
wobei die Dialogeinheit zur Bereitstellung eines Zugriffs des Passagiers auf das Internet ausgeführt ist; und
wobei die Dialogeinheit zur Bereitstellung von Internettelefonie für den Passagier ausgeführt ist.

12. Das interaktive Informationssystem nach einem der vorhergehenden Ansprüche, weiterhin aufweisend:
eine Steuereinheit zur Steuerung einer Sitzeinstellung, einer Lichtquelle und/oder einer Tonquelle.

13. Verwendung eines interaktiven Informationssystems nach einem der Ansprüche 1 bis 12 in einem Flugzeug.

14. Luftfahrzeug, aufweisend ein interaktives Informationssystem nach einem der Ansprüche 1 bis 12.

## Revendications

1. Système d'information interactif pour un aéronef pour fournir des informations à des passagers, dans lequel le système d'information interactif comprend :
- un dispositif embarqué (101) de stockage de données pour stocker des données primaires ;
- une unité d'accès (910) pour l'accès à des données secondaires pendant le vol, dans lequel les données secondaires sont stockées sur un dispositif externe (102) de stockage de données;
- un ordinateur (905) pour générer des données informatives sur la base des données primaires, des données secondaires et d'une position de l'aéronef ;
- une unité de sortie (906) pour visualiser les données informatives pour un passager ;
**caractérisé en ce que** le système d'information interactif est adapté pour l'entrée d'un profil d'utilisateur individuel, qui peut être administré par le passager, par le biais d'un appareil mobile du passager ;
dans lequel le système d'information interactif est adapté pour individualiser les données informatives sur la base du profil d'utilisateur ; et
dans lequel le profil d'utilisateur constitue une base pour afficher les données informatives sur l'unité de sortie.

2. Système d'information interactif selon la revendication 1, conçu pour visualiser les données informatives en temps réel.

3. Système d'information interactif selon la revendication 1 ou 2, dans lequel les données informatives visualisées comprennent une carte, des objets sélectionnés sur la carte et la position de l'aéronef.

4. Système d'information interactif selon l'une des revendications précédentes, comprenant en outre :
- une unité de dialogue avec un dispositif à commande vocale intégré pour que le passager entre des commandes de contrôle.

5. Système d'information interactif selon l'une des revendications précédentes, dans lequel l'unité d'accès (910) est conçue pour accéder aux données secondaires par l'intermédiaire de l'Internet.

6. Système d'information interactif selon l'une des revendications précédentes, dans lequel les données secondaires sont accessibles en fonction du mode d'affichage actuellement sélectionné.

7. Système d'information interactif selon l'une des revendications précédentes, dans lequel les données secondaires sont accessibles indépendamment du mode d'affichage actuellement sélectionné, et indépendamment de l'itinéraire de l'aéronef.

8. Système d'information interactif selon l'une des revendications précédentes, conçu pour choisir facultativement entre un fonctionnement automatique, guidé ou individualisé.

9. Système d'information interactif selon l'une des revendications précédentes, comprenant en outre :
- un module de communication conçu pour établir une communication entre au moins l'un des passagers et un membre de l'équipage, entre le passager et un autre passager, entre un membre de l'équipage et un autre membre de l'équipage, entre un membre de l'équipage et un personnel au sol ou des personnes hors-bord, et entre le passager et un personnel au sol ou des personnes hors-bord.

10. Système interactif d'information selon l'une des revendications précédentes, comprenant en outre :
- une interface pour fournir un échange de données entre le système d'information interactif et l'appareil mobile du passager.

11. Système d'information interactif selon l'une des revendications précédentes,
dans lequel l'unité de dialogue est conçue pour fournir au passager un accès à l'intemet ; et
dans lequel l'unité de dialogue est conçue pour fournir au passager la téléphonie par Internet.

12. Système d'information interactif selon l'une des revendications précédentes, comprenant en outre :
- une unité de commande pour commander au moins l'un d'un réglage de siège, d'une source de lumière et d'une source audio.

13. Utilisation d'un système d'information interactif selon l'une des revendications 1 à 12 dans un avion.

14. Aéronef disposant d'un système d'information interactif selon l'une des revendications 1 à 12.
